# EUROPEAN PATENT APPLICATION

(11) **EP 4 354 338 A1**
(43) Date of publication of application: **17.04.2024**
(21) Application number: 23194757.3
(22) Date of filing: 01.09.2023
(51) Int. Cl.: G06F 30/27, G06F 30/28

(54) **SYSTEM AND METHOD FOR STABILIZING AND ACCELERATING ITERATIVE NUMERICAL SIMULATION**

(30) Priority: 13.10.2022 IN 202221058590
(71) Applicant: Tata Consultancy Services Limited, Maharashtra (IN)
(72) Inventor: MAURYA, MITHILESH KUMAR, 411013 Pune, Maharashtra (IN); BANERJEE, DIGHANCHAL, 700160 Kolkata, West Bengal (IN); AHMAD, DILSHAD, 411013 Pune, Maharashtra (IN); DEY, SOUNAK, 700160 Kolkata, West Bengal (IN)
(74) Representative: Goddar, Heinz J.

(57) **Abstract**

Simulation of dynamic physical systems is done using iterative solvers. However, this iterative process is a time consuming and compute intensive process and, for a given set of simulation parameters, the solution does not always converge to a physically meaningful solution, resulting in huge waste of man hours and computation resource. Embodiments herein provide a method and system for stabilizing a diverged numerical simulation and accelerating a converged numerical simulation by changing one or more control parameters. An automatic monitoring mechanism of residue history (to interpret convergence or divergence) and a subsequent control logic to auto-tune the under-relaxation factor would help in stabilizing a diverging simulation and reaching faster convergence by accelerating converging simulation.

## Description

### CROSS-REFERENCE TO RELATED APPLICATIONS AND PRIORITY

The present application claims priority from Indian patent application number 202221058590, filed on October 13, 2022.

### TECHNICAL FIELD

The disclosure herein generally relates to the field of an iterative numerical simulation and more particularly, to a method and system for stabilizing a diverged numerical simulation and accelerating a converged numerical simulation by changing one or more control parameters.

### BACKGROUND

Numerical simulations play a key role in research and studies in different domains such as finance, electromagnetics, fluid flow, and heat transfer. The numerical simulation of fluid flow and heat transfer also known as Computational Fluid Dynamics (CFD) is highly used in aviation, weather simulation, natural science and environmental engineering, industrial design, and operations etc. This involves knowledge of fluid mechanics in order to numerically model/simulate fluid flow and fluid-solid interactions that follow well known Navier-Stokes equations. Solving these nonlinear coupled partial differential equations analytically, for many complex problems, is not practically possible.

Numerical simulation of dynamic physical systems is done using iterative solvers. However, this iterative process is a time consuming and compute intensive process and, for a given set of simulation parameters, the solution does not always converge to a physically meaningful solution, resulting in huge waste of man hours and computation resource. In case of CFD, the physical domain is meshed into number of cells (finite volumes) and the governing equations are discretized, decoupled, and linearized for each such cell. These systems of linear equations are then solved using iterative techniques to obtain a numerical solution. Though controlling factors like under relaxation factor and convergence indicators such as simulation residue history are tuned to ensure convergence, but that requires manual intervention to select suitable values.

### SUMMARY

Embodiments of the disclosure present technological improvements as solutions to one or more of the above-mentioned technical problems recognized by the inventors in conventional systems. For example, in one embodiment, a method and system for stabilizing a diverged numerical simulation and accelerating a converged numerical simulation by changing one or more control parameters is provided.

In one aspect, a processor-implemented method for stabilizing a diverged numerical simulation and accelerating a converged numerical simulation by changing one or more control parameters. The processor-implemented method comprising receiving a continuous past residue of an iterative numerical simulation, determining a status of the received past residue of the iterative numerical simulation using a classifier, predicting an output for an under-relaxation factor using a control logic and integrating the predicted output with the iterative numerical simulation to stabilize and accelerate iterative numerical simulation.

In another aspect, a system stabilizing a diverged numerical simulation and accelerating a converged numerical simulation by changing one or more control parameters is provided. The system includes an input/output interface configured to receive a continuous past residue of an iterative numerical simulation, wherein a fixed size window is chosen to select the past residue, one or more hardware processors and at least one memory storing a plurality of instructions, wherein the one or more hardware processors are configured to execute the plurality of instructions stored in the at least one memory. Further, the system is configured to determine a status of the received past residue of the iterative numerical simulation using a classifier, predict an output for an under-relaxation factor using a control logic, and integrate the predicted output with the iterative numerical simulation to stabilize and accelerate iterative numerical simulation.

In yet another aspect, one or more non-transitory machine-readable information storage mediums comprising one or more instructions which when executed by one or more hardware processors cause a method for stabilizing a diverged numerical simulation and accelerating a converged numerical simulation by changing one or more control parameters is provided. The processor-implemented method comprising receiving a continuous past residue of an iterative numerical simulation, determining a status of the received past residue of the iterative numerical simulation using a classifier, predicting an output for an under-relaxation factor using a control logic and integrating the predicted output with the iterative numerical simulation to stabilize and accelerate iterative numerical simulation.

It is to be understood that the foregoing general descriptions and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of an exemplary system for stabilizing and accelerating a numerical simulation by changing control parameters, in accordance with some embodiments of the present disclosure.
FIG. 2 is a block diagram to illustrate an integration of a controller with the CFD simulation, in accordance with some embodiments of the present disclosure.
FIG. 3 is a block diagram to illustrate one or more components of the CFD simulation, in accordance with some embodiments of the present disclosure.
FIG. 4 is a block diagram to illustrate components inside a controller, in accordance with some embodiments of the present disclosure.
FIG. 5 is a block diagram to illustrate a method for stabilizing and accelerating a numerical simulation by changing control parameters, in accordance with some embodiments of the present disclosure.
FIG.6 is a flow chart to illustrate self-learning and updating of a model used in the classifier, in accordance with some embodiments of the present disclosure.
FIG. 7 illustrates an experiment scenario of flow over a backward facing step, in accordance with some embodiments of the present disclosure.
FIG. 8 is a graphical representation to illustrate the CFD simulation stabilization, in accordance with some embodiments of the present disclosure.
FIG. 9 is a graphical representation to illustrate the CFD simulation acceleration, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The embodiments herein provide a method and system for stabilizing a diverged numerical simulation and accelerating a converging numerical simulation by changing one or more control parameters. It would be appreciated that an automatic monitoring mechanism of feedback parameter (residue history to interpret convergence or divergence) and a subsequent control logic to auto-tune the control parameter (under-relaxation factor) would help in stabilizing a diverging CFD simulation and reaching faster convergence by accelerating converging numerical simulation. Description of the invention is provided by taking CFD simulation as an example of numerical simulation. This should not limit the scope of the invention.

The Computational Fluid Dynamics (CFD) is the process of numerically modelling fluid flow problems by solving Navier-Stokes equations. The Navier-Stokes equations are a set of mathematical equations comprised of continuity equation that conserves mass of the fluid and momentum equation that ensure conservation of the momentum of the fluid. The Navier-Stokes equations are nonlinear, coupled partial differential equations. Exact analytical solution for these equations is not possible for many complex problems of practical importance. Various numerical techniques are often used to obtain approximate numerical solutions. The numerical solution involves (i) splitting the physical domain into numerous cells by meshing it, (ii) numerical discretization of the governing equations on each such cells, and (iii) an algorithm to decouple the coupled equation and linearize them to convert the governing equations into matrix equations. These linear equations are then solved using iterative techniques to obtain a numerical solution.

An iterative numerical simulation process for steady state physics starts with an initial guess for all the field variables at each cell of the domain. The solution is obtained by updating initial guess with the calculated values. However, it is observed that if calculated value is updated directly then the solution may become unstable. This instability is avoided by adding a scaled difference between the calculated value and previous value. The scaling factor *α* is called relaxation factor. Relaxation factor is import control parameter for any steady state CFD simulations.

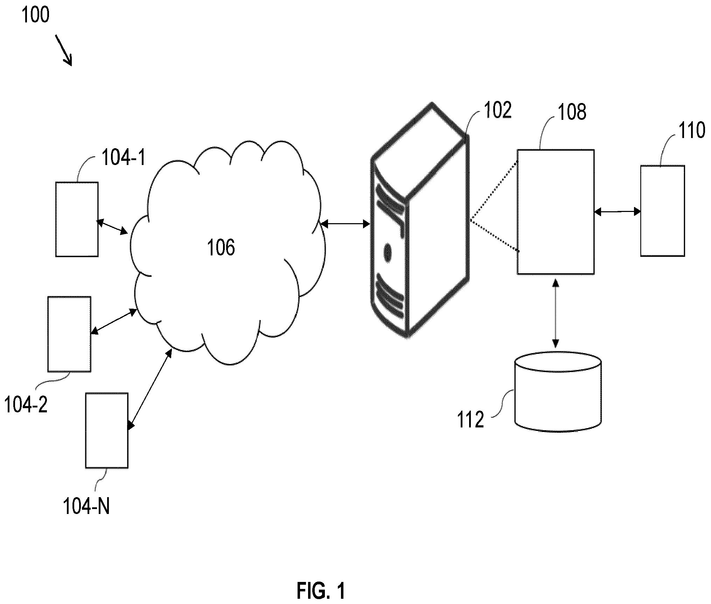

Referring now to the drawings, and more particularly to FIG. 1 through FIG. 9, where similar reference characters denote corresponding features consistently throughout the figures, there are shown preferred embodiments and these embodiments are described in the context of the following exemplary system and/or method.

FIG. 1 illustrates a block diagram of an exemplary system (100), in accordance with an example embodiment. Although the present disclosure is explained considering that the system (100) is implemented on a server, it may be understood that the system (100) may comprise one or more computing devices (102), such as a laptop computer, a desktop computer, a notebook, a workstation, a cloud-based computing environment and the like. It will be understood that the system (100) may be accessed through one or more input/output interfaces 104-1, 104-2... 104-N, collectively referred to as I/O interface (104). Examples of the I/O interface (104) may include, but are not limited to, a user interface, a portable computer, a personal digital assistant, a handheld device, a smartphone, a tablet computer, a workstation, and the like. The I/O interface (104) are communicatively coupled to the system (100) through a network (106).

In an embodiment, the network (106) may be a wireless or a wired network, or a combination thereof. In an example, the network (106) can be implemented as a computer network, as one of the different types of networks, such as virtual private network (VPN), intranet, local area network (LAN), wide area network (WAN), the internet, and such. The network (106) may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (106) may include a variety of network devices, including routers, bridges, servers, computing devices, storage devices. The network devices within the network (106) may interact with the system (100) through communication links.

The system (100) supports various connectivity options such as BLUETOOTH^{®}, USB, ZigBee, and other cellular services. The network environment enables connection of various components of the system (100) using any communication link including Internet, WAN, MAN, and so on. In an exemplary embodiment, the system (100) is implemented to operate as a stand-alone device. In another embodiment, the system (100) may be implemented to work as a loosely coupled device to a smart computing environment. Further, the system (100) comprises at least one memory (110) with a plurality of instructions, one or more databases (112), and one or more hardware processors (108) which are communicatively coupled with the at least one memory (110) to execute a plurality of instructions therein. The components and functionalities of the system (100) are described further in detail.

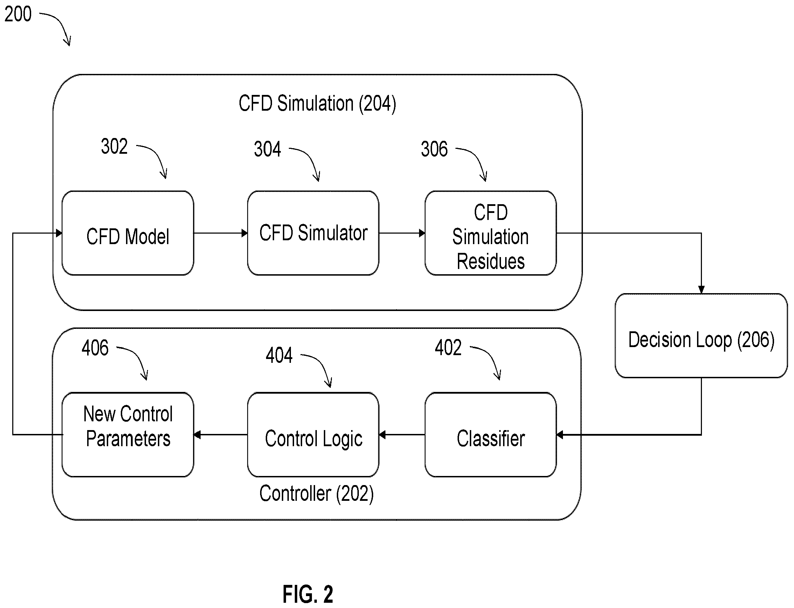

Referring FIG. 2, a block diagram (200) to illustrate the integration of a controller (202) with the CFD simulation (204) using two decision loops (206). The controller (202) and the CFD simulation (204) work in parallel to each other i.e., the CFD simulation (204) is not interrupted due to the controller (202). Once the CFD simulation (204) starts, the decision loop (206) triggers the controller (202). The controller (202) takes action on the controlling parameter by increasing, decreasing, or doing nothing i.e., keeping the values as same. This updated control parameters are passed to the CFD simulation (204) again through the decision loop (206). Once the CFD simulation (204) ends reaching convergence or it reaches the end of time to simulate, the decision loop (206) stops the controller (202).

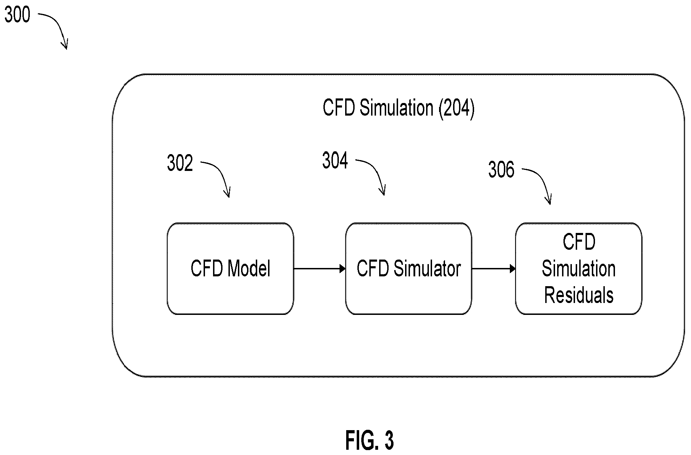

Referring FIG. 3, a block diagram (300) to illustrate one or more components within the CFD simulation (204) in accordance with some embodiments of the present disclosure. The CFD simulation captures problem definition in a form of a CFD model (302). The CFD model (302) contains information about the geometry, governing equations, boundary conditions, numerical schemes to discretize the terms in governing equations. Once a problem is captured in the CFD model (302), the problem goes to CFD simulator (304). The CFD simulator (304) is simply solving for the variables of the governing equations. There are many commercial and open source/free solvers available to perform CFD simulations. Some of them are Ansys Fluent, OpenFOAM, SU2, pyFR etc. An indicator of the global convergence during the simulation is aggregate of source imbalances calculated at each cell. This imbalance is known as simulation residue. All these CFD solvers give out the CFD simulation residue (306).

It would be appreciated that the residue value is calculated for the whole domain at each iteration using L1, L2 or L∞ norms. Scaled residue is the percentage loss/gain in the source imbalance. Each CFD solver uses different scaling factor (n) and outputs the simulation residue history that in turn helps user identify convergence or divergence behavior of the simulation. Simulation residue is calculated for all variables and continuity terms. A tolerance value on simulation residue (306) helps in deciding the convergence of the CFD simulation.

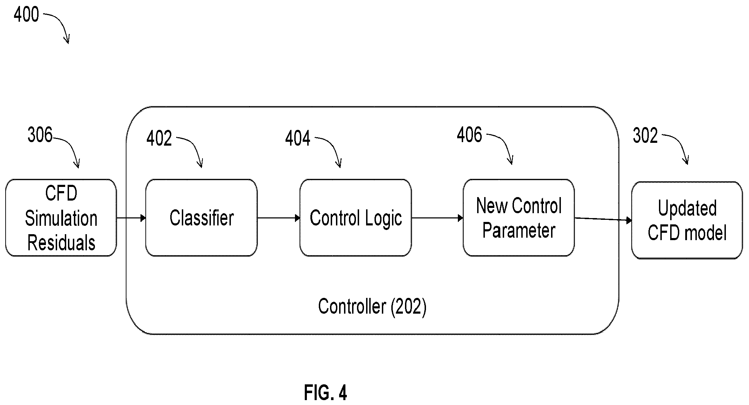

Referring FIG. 4, a block diagram (400) to illustrate one or more components within the controller (202), in accordance with some embodiments of the present disclosure. Firstly, a continuous time series of the CFD simulation residue (306) is sent to the classifier (402) through I/O device (104), where the classifier can be a mathematical time-series classifier, frequency-based classifier, machine learned classifiers such as Reinforcement Learning (RL), Long Short-term Memory (LSTM), Spiking Neural Network (SNN). An output of classifier (402) is fed to a control logic (404), where the control logic (404) can be an if-else condition or more complex logics such as mathematical logic, data-based logic, machine learned logic or fuzzy logic. From the control logic (404), one or more control parameters are tuned, and new control parameters (406) are obtained, which is fed back to get an updated CFD model (302).

In one instance of the classifier (402), an SNN based classifier is used. The SNN architecture is comprised of a spike encoder, a spiking reservoir, and a classifier. The spike encoder converts real-valued time series data into representative spike trains. The encoded spike trains are fed into the spiking reservoir based spiking neural network through a sparse random connections or synapses. The spiking reservoir is a sparse and recurrently connected population of excitatory and inhibitory neurons, where each neuron is connected to a set of other neurons in the same population in a probabilistic fashion such that resulting dynamics of the network remains stable and does not go into chaotic regime. The neuronal trace values of the excitatory reservoir neurons are fed into a Logistic Regression based classifier that is trained with corresponding class labels. Once training is done, the neuronal trace values corresponding to testing data are fed into this classifier to get the final classification result.

In one instance of control parameters (406), the under-relaxation factor is used to update the current solution by taking values from past iteration with a scaling factor. Under relaxation factor (URF) is problem specific and varies for different class of problems.

In another instance of control logic (404), the change of control parameter is based on the output of the classifier and current value of control parameter using fuzzy logic. Fuzzy logic membership functions are developed for the inputs and outputs which are connected through fuzzy rules. If the simulation is converging and control parameter values are low, then a high positive percentage change in control parameter is made. Similarly, when the simulation diverges and control parameter values are high, then a high negative percentage change in control parameters is made. The fuzzy rules are such that it always tries to keep the value of control parameter at optimum. In one example of fuzzy logic, 4 membership functions were used for inputs current control parameter and classifier output i.e., class of recent past residue. And 6 membership function for output of percentage change in control parameter value. The new control parameters are limited by upper and lower bounds as in this case URF is maintained between 0.1 to 1.2.

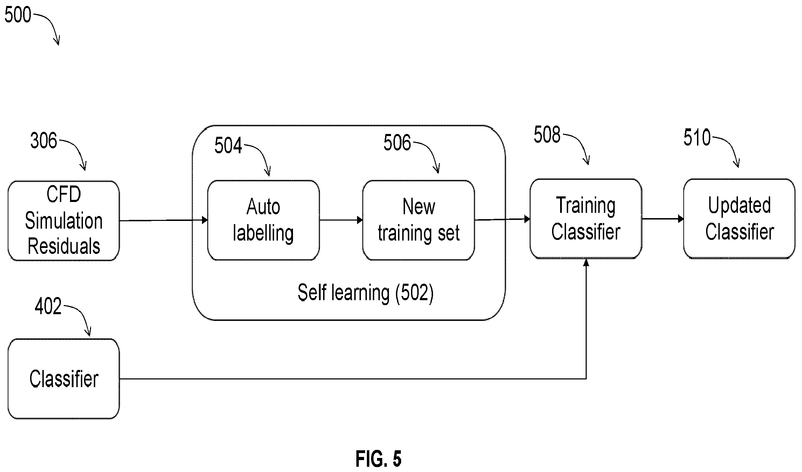

Referring FIG. 5, a block diagram (500) to illustrate the self-learning of the model, in accordance with some embodiments of the present disclosure. For any new CFD model, once the CFD simulation is done and CFD simulation residues (306) are generated then the system does auto-labelling (504) of the simulation residues from the final state of simulation into converging and diverging classes. A new training set (506) is created from the auto labelled simulation residue data. A balanced data for diverging and converging cases are generated by inverting the simulation residue for converging case into diverging and vice versa. The training classifier (508) uses the new training data set along with previous classifier model (402) to get an updated classifier (510). Hence, the updated classifier model (510) is obtained which may be used for classification. Self-learning of the classifier help it evolve over time and makes it general and robust to handle any new problems.

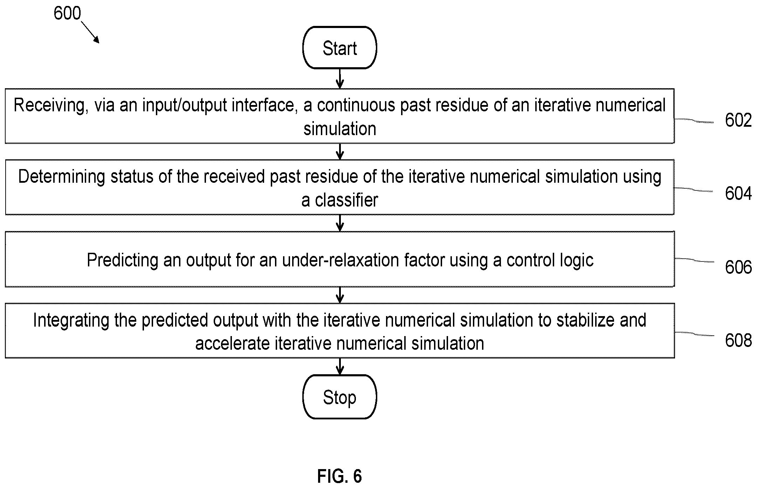

Referring FIG. 6, a flow chart (600) to illustrate a processor-implemented method for stabilizing a diverged CFD simulation and accelerating a converged CFD simulation by changing one or more control parameters is provided. Initially, at step (602), receiving a continuous past residue of an iterative numerical simulation. Wherein a fixed size window is chosen to select the past residue.

At the next step (604), determining a status of the received past residue of the iterative numerical simulation using a classifier. The status includes a stable and an unstable simulation.

At the next step (606), predicting an output for an under-relaxation factor using a control logic.

At the last step (608), integrating the predicted output with the iterative numerical simulation to stabilize and accelerate iterative numerical simulation. Wherein the SNN based classifier and the control logic work together without interfering with the iterative numerical simulation until the simulation ends.

### Experiment:

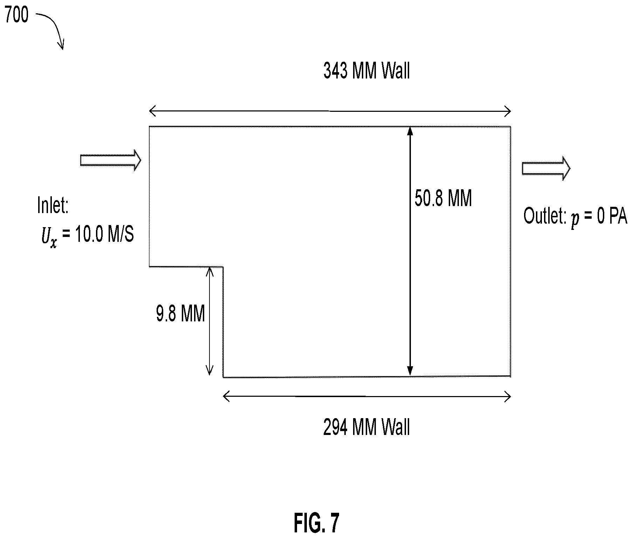

Referring FIG. 7, demonstrating an experiment scenario to illustrate an experimental result of the disclosed embodiments. The backward-facing step is widely known for its application in the studies on turbulence in internal flows. A developed steady turbulent flow enters through the inlet, passes over the step where it detaches from the boundary and further reattaches at a particular length. This simulation is to replicate experiment performed in 1985 by Driver and Seegmiller. Physics involved here is incompressible turbulent flow, two-dimensional flow, viscous flow, steady flow without any chemical reaction.

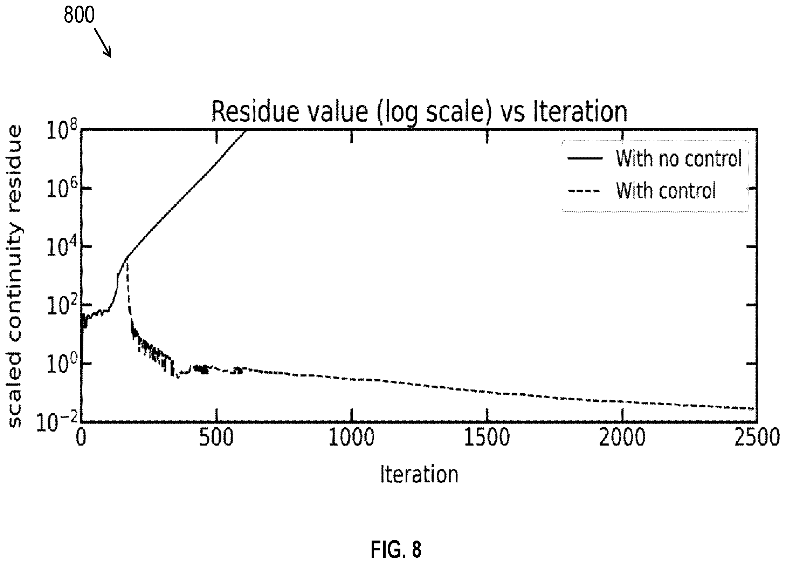

Referring FIG. 8, a graphical representation (800), to illustrate a plot of scaled continuity residue on log scale vs simulation iterations. During the simulation, as the residues starts to increase, the classification predicts divergence, and the control logic reduces the under-relaxation factor. As can be seen using curves as *"with control"* plotted using dashed line and *"without control"* plotted using solid line, the classifier and control logic stabilize the CFD simulation.

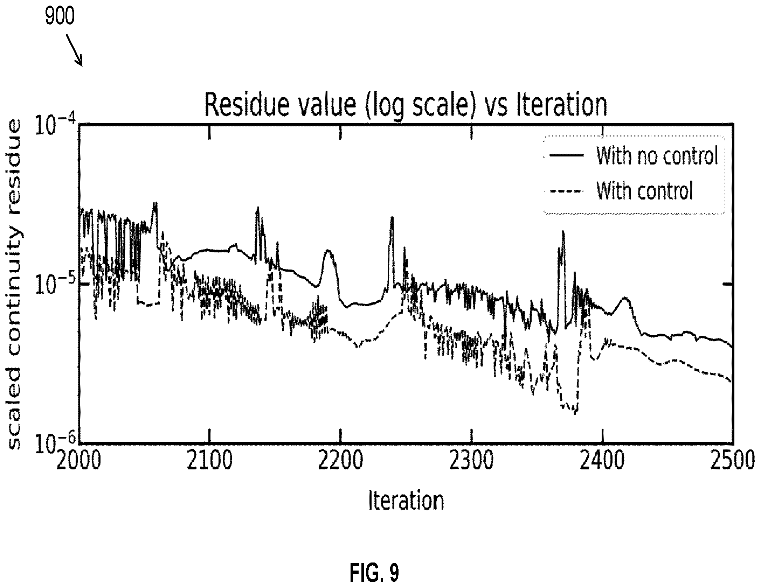

During the simulation, as the residues are decreasing, the classification predicts convergence, and the control logic increases the under-relaxation factor. As can be seen using curves as *"with control"* plotted using dashed line and *"without control"* plotted using solid line, the classifier and control logic accelerate the CFD simulation as shown in FIG. 9. In one embodiment the reduction in the number of iteration is more than 10%.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the problem of systems of linear equations solved using iterative process to obtain a numerical solution.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (600) comprising:
receiving (602), via an input/output interface, a continuous past residue of an iterative numerical simulation, wherein a fixed size window is chosen to select the continuous past residue;
determining (604), via one or more hardware processors, a status of the received continuous past residue of the iterative numerical simulation using a classifier, wherein the status includes one of a stable or an unstable simulation;
predicting (606), via the one or more hardware processors, an output for a control parameters using a control logic; and
integrating (608), via the one or more hardware processors, the predicted output with the iterative numerical simulation to stabilize and accelerate iterative numerical simulation.

2. The processor-implemented method (600) as claimed in claim 1, wherein a self-learning of the classifier comprising:
receiving, via the one or more hardware processors, continuous past residue, and outcome of the simulation;
self-labelling, via the one or more hardware processors, the continuous past residue based on the outcome of the simulation; and
updating, via the one or more hardware processors, the classifier based on the self-labelled past residue.

3. The processor-implemented method (600) as claimed in claim 1, wherein the classifier a mathematical time-series classifier, frequency-based classifier, machine learned classifiers such as Reinforcement Learning (RL), Long Short-term Memory (LSTM), Spiking Neural Network (SNN).

4. The processor-implemented method (600) as claimed in claim 1, wherein the control logic includes an if-else, a fuzzy logic, and a mathematical logic.

5. The processor-implemented method (600) as claimed in claim 1, wherein the SNN based classifier and the control logic work together without interfering with the iterative numerical simulation until the simulation ends.

6. A system (100) comprising:
an input/output interface (104) to receive a continuous past residue of an iterative numerical simulation, wherein a fixed size window is chosen to select the continuous past residue;
a memory (110) in communication with the one or more hardware processors (108), wherein the one or more hardware processors (108) are configured to execute programmed instructions stored in the memory (110) to;
determine a status of the received continuous past residue of the iterative numerical simulation using a classifier, wherein the status includes a stable and an unstable simulation; predict an output for control parameters using a control logic; and
integrate the predicted output with the iterative numerical simulation to stabilize and accelerate iterative numerical simulation.

7. The system (100) as claimed in claim 6, wherein a self-learning of the classifier comprising:
receiving, via the one or more hardware processors, continuous past residue, and outcome of the simulation;
self-labelling, via the one or more hardware processors, the continuous past residue based on the outcome of the simulation; and
updating, via the one or more hardware processors, the classifier based on the self-labelled past residue.

8. The system (100) as claimed in claim 6, wherein the classifier a mathematical time-series classifier, frequency-based classifier, machine learned classifiers such as Reinforcement Learning (RL), Long Short-term Memory (LSTM), Spiking Neural Network (SNN).

9. The system (100) as claimed in claim 6, wherein the control logic includes an if-else, a fuzzy logic, and a mathematical logic.

10. The system (100) as claimed in claim 6, wherein the SNN based classifier and the control logic work together without interfering with the iterative numerical simulation until the simulation ends.

11. One or more non-transitory machine-readable information storage mediums comprising one or more instructions which when executed by one or more hardware processors cause:
receiving, via an input/output interface, a continuous past residue of an iterative numerical simulation, wherein a fixed size window is chosen to select the continuous past residue;
determining a status of the received continuous past residue of the iterative numerical simulation using a classifier, wherein the status includes a stable and an unstable simulation;
predicting an output for an under-relaxation factor using a control logic; and
integrating the predicted output with the iterative numerical simulation to stabilize and accelerate iterative numerical simulation.

12. The one or more non-transitory machine-readable information storage mediums as claimed in claim 11, wherein a self-learning of the classifier comprising:
receiving continuous past residue, and outcome of the simulation;
self-labelling the continuous past residue based on the outcome of the simulation; and
updating the classifier based on the self-labelled past residue.

13. The one or more non-transitory machine-readable information storage mediums as claimed in claim 11, wherein the classifier a mathematical time-series classifier, frequency-based classifier, machine learned classifiers such as Reinforcement Learning (RL), Long Short-term Memory (LSTM), Spiking Neural Network (SNN).

14. The one or more non-transitory machine-readable information storage mediums as claimed in claim 11, wherein the control logic includes an if-else, a fuzzy logic, and a mathematical logic.

15. The one or more non-transitory machine-readable information storage mediums as claimed in claim 11, wherein the SNN based classifier and the control logic work together without interfering with the iterative numerical simulation until the simulation ends.
